(19) Europäisches Patentamt
European Patent Office
Office européen des brevets

(11) **EP 2 198 187 B1**

(12) **EUROPÄISCHE PATENTSCHRIFT**

(45) Veröffentlichungstag und Bekanntmachung des Hinweises auf die Patenterteilung:
**19.01.2011 Patentblatt 2011/03**

(21) Anmeldenummer: **08803983.9**

(22) Anmeldetag: **11.09.2008**

(51) Int Cl.:
*F16H 61/02* (2006.01)   *F16H 59/66* (2006.01)

(86) Internationale Anmeldenummer:
**PCT/EP2008/062016**

(87) Internationale Veröffentlichungsnummer:
**WO 2009/037171 (26.03.2009 Gazette 2009/13)**

(54) **VERFAHREN ZUR STEUERUNG EINES AUTOMATISIERTEN STUFENSCHALTGETRIEBES**

METHOD FOR CONTROLLING AN AUTOMATIC MULTI-STEP SHIFT TRANSMISSION

PROCÉDÉ DE COMMANDE D'UNE BOÎTE DE VITESSES ÉTAGÉE AUTOMATISÉE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.09.2007 DE 102007044434**

(43) Veröffentlichungstag der Anmeldung:
**23.06.2010 Patentblatt 2010/25**

(73) Patentinhaber: **ZF Friedrichshafen AG 88038 Friedrichshafen (DE)**

(72) Erfinder:
• **WOLFGANG, Werner 88213 Ravensburg (DE)**
• **WÜRTHNER, Maik 88048 Friedrichshafen (DE)**

(56) Entgegenhaltungen:
**EP-A- 0 864 781   DE-A1- 3 334 718
DE-C2- 4 440 706   US-A- 5 231 897
US-A- 5 803 865**

**Beschreibung**

Die Erfindung betrifft ein Verfahren zur Steuerung eines automatisierten Stufenschaltgetriebes, das innerhalb eines Antriebsstrangs eines Kraftfahrzeugs, beispielsweise eines Nutzfahrzeugs, im Kraftfluss zwischen einem als Verbrennungsmotor ausgebildeten Antriebsmotor und einem Achsantrieb einer Antriebsachse oder einem Verteilergetriebe angeordnet ist, wobei die aktuelle Fahrbahnneigung ermittelt wird und nach einer Einfahrt in eine Gefällstrecke zur Erhöhung der Bremswirkung des Antriebsmotors und/oder einer Dauerbremse in einen niedrigeren Gang sowie spätestens nach einem Übergang in den Zugbetrieb oder nach der Einfahrt in eine Ebene in einen höheren Gang geschaltet wird.

Bei einem Kraftfahrzeug, das mit einem automatisierten Stufenschaltgetriebe, wie einem automatisierten Schaltgetriebe, einem automatisierten Doppelkupplungsgetriebe oder einem Wandler-Automatgetriebe ausgerüstet ist, wird nach der Einfahrt in eine Gefällstrecke ein niedrigerer Gang eingelegt, um nach dem Übergang in den Schubbetrieb die Drehzahl des dann mit Schubabschaltung, also ohne Kraftstoffeinspritzung, betriebenen Antriebsmotors zu erhöhen. Durch die erhöhte Drehzahl des Antriebsmotors steigt das Schleppmoment und damit die Bremswirkung des Antriebsmotors an. Zudem wird die durch das Schleppmoment des Antriebsmotors an den Antriebsrädern bewirkte Bremskraft durch die höhere Übersetzung des niedrigeren Gangs zusätzlich erhöht.

Ist das Kraftfahrzeug, wie bei schweren Nutzfahrzeugen üblich, mit einer Dauerbremse, wie einem elektromagnetischen oder hydrodynamischen Retarder, ausgerüstet, wird diese beim Befahren steiler und/oder längerer Gefällstrecken zusätzlich aktiviert, welches manuell durch den Fahrer oder auch automatisch durch ein elektronisches Steuerungsgerät erfolgen kann. Bei einer primärseitigen, also an der Eingangswelle des Stufenschaltgetriebes angeordneten Dauerbremse, vergrößert sich mit der erhöhten Drehzahl des Antriebsmotors sowohl deren Bremswirkung als auch deren durch die Kühlung begrenzte Bremskapazität. Bei einer sekundärseitigen, das heißt an der Ausgangswelle des Stufenschaltgetriebes angeordneten Dauerbremse erhöht sich mit der erhöhten Drehzahl des Antriebsmotors dagegen nur deren Bremskapazität, sofern die Kühlung der Dauerbremse mit der Kühlung des Antriebsmotors gekoppelt ist, was z.B. bei einem als Intarder bezeichneten Sekundärretarder der Fall ist, bei dem der Ölkreislauf mit dem des Stufenschaltgetriebes und der über einen Wärmetauscher mit dem Ölkreislauf in Verbindung stehende Kühlwasserkreislauf mit dem des Antriebsmotors gekoppelt ist. Eine entsprechende automatische Rückschaltung erfolgt in Abhängigkeit geeigneter Betriebsparameter, wie dem Fahrbahngefälle, der Fahrzeugmasse und einer Bremsanforderung des Fahrers.

Eine entsprechende Getriebesteuerung ist aus der DE 33 34 718 A1 bekannt. Diese Getriebesteuerung weist Einrichtungen zur Ermittlung der Fahrbahnneigung (Fahrbahnsteigung bzw. Fahrbahngefälle), der Fahrzeugmasse, des Motormomentes und eines für einen beschleunigungslosen Antrieb des Kraftfahrzeugs erforderlichen stationären Momentes auf. Mittels einer Gefällegangzuordnung wird jedem Fahrbahngefälle ein optimal passender Gang zugeordnet, mit dem das Gefälle ohne eine zusätzliche Betätigung der Betriebsbremse mit konstanter Fahrgeschwindigkeit befahren werden kann, wobei die Benutzung einer gegebenenfalls vorhandenen Dauerbremse berücksichtigt wird. Eine Schaltung in den optimalen Gang wird entweder dem Fahrer empfohlen, z.B. mittels einer entsprechenden Sollganganzeige, oder automatisch ausgelöst. Eine Schaltung in den optimalen Gang wird dann gesperrt, wenn der Fahrer beim Befahren eines Gefälles das Fahrpedal betätigt oder das Gefälle gerade deutlich kleiner wird.

Außerdem ist in der US 5,231,897 eine entsprechende Steuerungseinrichtung eines Automatgetriebes beschrieben, bei der aus der Fahrzeugbeschleunigung und dem Drehmoment des Antriebsmotors der aktuelle Fahrwiderstand berechnet wird. Wenn der aktuelle Fahrwiderstand einen oberen ersten Grenzwert überschreitet, wird daraus eine Bergauffahrt erkannt und eine Hochschaltung verhindert. Wenn der aktuelle Fahrwiderstand einen unteren zweiten Grenzwert unterschreitet, wird daraus eine Bergabfahrt erkannt und zur Erzielung einer Bremswirkung des Antriebsmotors eine Rückschaltung ausgelöst.

Die EP 0 864 781 A1 offenbart ein Verfahren zum Steuern einer Drehzahländerung eines Fahrzeug-Automatikgetriebes, wobei ein Drehzahländerungsschritt bei einem Gefälle auf der Basis einer Neigung einer Straßenfläche bestimmt wird, auf der das Fahrzeug fährt. Die Fahrzeugbeschleunigung wird mit einer Bezugsbeschleunigung verglichen, die einem Fahrzeug-Fahrzustand entspricht. Eine Hochschaltaufforderung wird auf Basis der Ergebnisse des Vergleichs selektiv aufgehoben, wobei die Bezugsbeschleunigung auf der Basis der Neigung, die als ein Fahrzeug-Fahrzustand dient, eingestellt wird. Die Bezugsbeschleunigung wird nach diesem Verfahren so eingestellt, dass die Hochschaltaufforderung umso schneller aufgehoben wird, je steiler ein Gefälle ist.

In der DE 44 40 706 C2, die alle Merkmale des Oberbegriffs des Anspruchs 1 offenbart, wird ein Verfahren zur Steuerung eines Auto-matgetriebes vorgeschlagen, nach dem aus der erfassten Fahrbahnneigung und dem ermittelten Streckenprofil ein effektiver Bergfaktor bestimmt wird, der als Interpolationsfaktor verwendet wird. Bei einer erkannten Bergauffahrt werden die aktuell verwendeten Schaltkennlinien jeweils durch eine Interpolation zwischen einer Schaltkennlinie für eine Fahrt in der Ebene und einer Schaltkennlinie für eine Fahrt bei extremer Fahrbahnsteigung ermittelt. Bei einer erkannten Bergabfahrt werden die aktuell verwendeten Schaltkennlinien jeweils durch eine Interpolation zwischen einer Schaltkennlinie für eine Fahrt in der Ebene und einer Schaltkennlinie für eine Fahrt bei extremem Fahrbahngefälle ermittelt.

Eine Hochschaltung erfolgt beim Stand der Technik erst nach dem Übergang in den Zugbetrieb, also wenn der Fahrer das Fahrpedal betätigt oder eine eingeschaltete Geschwindigkeitsregelanlage die Kraftstoffeinspritzung des Antriebsmotors automatisch eingeschaltet hat. Ausnahmsweise kann eine Hochschaltung bei aktivierter Schubabschaltung des Antriebsmotors beim Befahren einer Gefällstrecke auch automatisch als Schutzschaltung ausgelöst werden, wenn die Drehzahl des Antriebsmotors, z.B. aufgrund einer Einfahrt in eine sehr steile Gefällstrecke oder wegen einer hohen Fahrzeugmasse, eine kritische obere Drehzahlgrenze erreicht oder überschritten hat. Nachteilig an einer erst nach der Einfahrt in eine Ebene oder nach dem Übergang in den Zugbetrieb erfolgenden Hochschaltung ist, dass der Schwung des Kraftfahrzeugs, also die auf das Kraftfahrzeug wirksame Hangabtriebskraft, im Gefälleauslauf nur unzureichend genutzt wird, um das Kraftfahrzeug im Gefälleauslauf und zu Beginn der daran anschließenden Ebene oder einem neuen Anstieg anzutreiben. Dadurch wird der Schubbetrieb relativ früh beendet und die Kraftstoffeinspritzung wieder eingeschaltet, was einen unnötig hohen Kraftstoffverbrauch bewirkt. Zudem ist die Lärmentwicklung des Antriebsmotors im Gefälleauslauf aufgrund der durch den niedrigeren Gang bedingten hohen Motordrehzahl nachteilig hoch.

Der vorliegenden Erfindung liegt daher die Aufgabe zugrunde, ein Verfahren zur Steuerung eines automatisierten Stufenschaltgetriebes der eingangs genannten Art anzugeben, mit dem das Schaltverhalten des Stufenschaltgetriebes im Gefälleauslauf im Hinblick auf einen geringeren Kraftstoffverbrauch und niedrigere Lärmemissionen verbessert werden kann.

Die Lösung dieser Aufgabe ergibt sich aus den Merkmalen des Hauptanspruchs, während vorteilhafte Weiterbildungen den Unteransprüchen entnehmbar sind.

Gemäß den Merkmalen des Hauptanspruchs geht die Erfindung aus von einem Verfahren zur Steuerung eines automatisierten Stufenschaltgetriebes, das innerhalb eines Antriebsstrangs eines Kraftfahrzeugs, beispielsweise eines Nutzfahrzeugs, im Kraftfluss zwischen einem als Verbrennungsmotor ausgebildeten Antriebsmotor und einem Achsantrieb einer Antriebsachse oder einem Verteilergetriebe angeordnet ist, wobei die aktuelle Fahrbahnneigung ermittelt wird und nach einer Einfahrt in eine Gefällstrecke zur Erhöhung der Bremswirkung des Antriebsmotors und/oder einer Dauerbremse in einen niedrigeren Gang sowie spätestens nach einem Übergang in den Zugbetrieb oder nach der Einfahrt in eine Ebene in einen höheren Gang geschaltet wird. Zusätzlich ist vorgesehen, dass spätestens nach der Einfahrt in die Gefällstrecke und/oder nach dem Übergang in den Schubbetrieb eine Erkennungsfunktion zur Ermittlung eines Gefälleauslaufs gestartet wird, und dass bei einem erkannten Gefälleauslauf schon vor der Einfahrt in die Ebene und/oder vor dem Übergang in den Zugbetrieb im Schubbetrieb in einen höheren Gang geschaltet, also eine Schubhochschaltung durchgeführt wird.

Gemäß den Merkmalen des Hauptanspruchs geht die Erfindung aus von einem Verfahren zur Steuerung eines automatisierten Stufenschaltgetriebes, wie ein automatisiertes Schaltgetriebe, ein automatisiertes Doppelkupplungsgetriebe oder ein Wandler-Automatgetriebe, das innerhalb eines Antriebsstrangs eines Kraftfahrzeugs im Kraftfluss zwischen einem als Verbrennungsmotor ausgebildeten Antriebsmotor und einem Achsantrieb einer Antriebsachse oder einem Verteilergetriebe angeordnet ist, wobei die aktuelle Fahrbahnneigung (Fahrbahnsteigung bzw. Fahrbahngefälle) ermittelt wird und nach einer Einfahrt in eine Gefällstrecke zur Erhöhung der Bremswirkung des Antriebsmotors und/ oder einer Dauerbremse in einen niedrigeren Gang sowie spätestens nach einem Übergang in den Zugbetrieb oder nach der Einfahrt in eine Ebene in einen höheren Gang geschaltet wird. Außerdem ist vorgesehen, dass spätestens nach der Einfahrt in die Gefällstrecke und/oder nach dem Übergang in den Schubbetrieb eine Erkennungsfunktion zur Ermittlung eines Gefälleauslaufs gestartet wird, und dass bei einem erkannten Gefälleauslauf schon vor der Einfahrt in die Ebene und/oder vor dem Übergang in den Zugbetrieb im Schubbetrieb in einen höheren Gang geschaltet, also eine Schubhochschaltung durchgeführt wird.

Es wird somit während des Übergangs vom Gefälle zur Ebene eine Schubhochschaltung durchgeführt. Hierdurch wird die Drehzahl des Antriebsmotors und eines gegebenenfalls vorhandenen Primärretarders um den Übersetzungssprung zwischen dem zuvor eingelegten niedrigeren Gang und dem aktuell eingelegten höheren Gang abgesenkt. Dies führt, neben einer Absenkung der Lärmemissionen des Antriebsmotors und des Stufenschaltgetriebes, zu einer Reduzierung des Schleppmomentes des Antriebsmotors und des Bremsmomentes des Primärretarders. Demzufolge wird das Kraftfahrzeug beim Durchfahren des Gefälleauslaufs aufgrund der insgesamt geringeren Bremskräfte im Schubbetrieb zumindest geringfügig beschleunigt bzw. in der sich anschließenden Ebene nicht so stark abgebremst, so dass der Übergang in den Zugbetrieb beim anschließenden Befahren der Ebene im Vergleich zu bisherigen Steuerungsverfahren deutlich später erfolgt. Daraus können sich, besonders wenn das Streckenprofil der befahrenen Fahrstrecke häufige Wechsel zwischen bergigen und ebenen Abschnitten aufweist, deutliche Kraftstoffeinsparungen ergeben. Zudem wird der Fahrer durch eine derartige, automatisch ausgelöste Hochschaltung von der Wahl des optimalen Gangs entlastet und kann sich besser auf die Beobachtung des Verkehrsgeschehens konzentrieren.

Um den Gefälleauslauf mit hoher Zuverlässigkeit bestimmen zu können, umfasst die Erkennungsfunktion bevorzugt eine erste Teilfunktion zur Ermittlung einer Gefällstrecke und eine zweite Teilfunktion zur Ermittlung einer Ebene, wobei die erste Teilfunktion spätestens nach der Einfahrt in die Gefällstrecke und/oder nach dem Übergang in den Schubbetrieb gestartet wird, die erste Teilfunktion beendet und die zweite Teilfunktion gestartet wird, wenn in der ersten Teilfunktion ein Gefälle erkannt wird, und die zweite Teilfunktion beendet und die Schaltung in einen höheren Gang ausgelöst wird, wenn in der zweiten Teilfunktion eine Ebene erkannt wird.

Der Aufteilung der Erkennungsfunktion in die beiden genannten Teilfunktionen liegt die Erkenntnis zugrunde, dass ein Gefälleauslauf im Übergang zwischen einer Gefällstrecke und einer Ebene liegt. Wird zunächst eine Gefällstrecke, deren Fahrbahnneigung $N_{FB}$ zumeist gewisse Schwankungen aufweist, und kurz darauf eine Ebene, deren Fahrbahnneigung $N_{FB}$ ebenfalls in gewissem Umfang Schwankungen aufweist, relativ sicher erkannt, so befindet sich das Kraftfahrzeug mit hoher Sicherheit gerade in einem Gefälleauslauf am Anfang einer Ebene, und die Schubrückschaltung kann gefahrlos ausgelöst werden.

Die erste Teilfunktion, in der die Beobachtung auf ein gegebenenfalls vorliegendes Gefälle erfolgt, ist bevorzugt derart aufgebaut, dass mit Ausnahme des Start- und Initialisierungsschrittes (Schritte a und b) bis zur Ermittlung eines Gefälles die folgenden Schritte in einem festgelegten Zeittakt wiederholt durchlaufen werden:

a) Start der ersten Teilfunktion (Beobachtung auf Gefälle),
b) Setzen eines Beobachtungszählers $Z_{B/G}$ auf einen positiven Startwert $Z_{B/G}$ (ZB/G = $Z_{B/G} > 0$, Initialisierung),
c) Ermitteln der aktuellen Fahrbahnneigung $N_{FB}$,
d) Ermitteln eines aktuellen Zählerinkrementes $I_{B/G}$ in Abhängigkeit von der aktuellen Fahrbahnneigung $N_{FB}$ ( $I_{B/G}$ = $f(N_{FB})$ ), wobei eine Fahrbahnsteigung ($N_{FB} > 0$) ein positives Zählerinkrement ($I_{B/G} > 0$), eine Ebene ($N_{FB} \approx 0$) ein Nullinkrement ($I_{B/G} \approx 0$) und ein Fahrbahngefälle ($N_{FB} < 0$) ein negatives Zählerinkrement ($I_{B/G} < 0$) ergibt,
e) Addition des Zählerinkrementes $I_{B/G}$ zu dem Beobachtungszähler $Z_{B/G}$ ($Z_{B/G} = Z_{B/G} + I_{B/G}$),
f) Beenden der ersten Teilfunktion, wenn der Beobachtungszähler $Z_{B/G}$ den Wert Null erreicht oder unterschritten hat ($Z_{B/G} \leq 0$, Gefälle gilt als erkannt).

Die zweite Teilfunktion, in der die Beobachtung auf eine gegebenenfalls vorliegende Ebene erfolgt, ist bevorzugt in ähnlicher Weise derart aufgebaut, dass mit Ausnahme des Start- und Initialisierungsschrittes (Schritte g und h) bis zur Ermittlung des Vorliegens einer Ebene die folgenden Schritte in einem festgelegten Zeittakt wiederholt durchlaufen werden:

g) Start der zweiten Teilfunktion (Beobachtung auf Vorliegen einer Ebene),
h) Setzen eines Beobachtungszählers $Z_{B/E}$ auf einen positiven Startwert $Z_{B/E\_0}$ ($Z_{B/E} = Z_{B/E\_0} > 0$, Initialisierung),
i) Ermitteln der aktuellen Fahrbahnneigung $N_{FB}$,
j) Ermitteln eines aktuellen Zählerinkrementes $I_{B/E}$ in Abhängigkeit von der aktuellen Fahrbahnneigung $N_{FB}$ ($i_{B/E}$ = $f(N_{FB})$ ), wobei eine im Betrag außerhalb eines nahe Null liegenden Neigungsgrenzwertes $\pm N_{Gr}$ oder einer diesbezüglichen Grenzwertspanne liegende Fahrbahnneigung $N_{FB}$ ($|N_{FB}| > |\pm N_{Gr}|$) ein positives Zählerinkrement ($I_{B/E} > 0$), eine im Betrag den Neigungsgrenzwert $\pm N_{Gr}$ treffende Fahrbahnneigung $N_{FB}$ ($|N_{FB}| \approx |\pm N_{Gr}|$ ) ein Nullinkrement ($I_{B/E} \approx 0$) und eine im Betrag innerhalb des Neigungsgrenzwertes $N_{Gr}$ oder einer diesbezüglichen Grenzwertspanne ($|N_{FB|} < |\pm N_{Gr}|$) liegende Fahrbahnneigung $N_{FB}$ ein negatives Zählerinkrement ($|_{B/E} < 0$) ergibt,
k) Addition des Zählerinkrementes $I_{B/E}$ zu dem Beobachtungszähler $Z_{B/E}$ ($Z_{B/E} = Z_{B/E} + I_{B/E}$),
l) Beenden der zweiten Teilfunktion, wenn der Beobachtungszähler $Z_{B/E}$ den Wert Null erreicht oder unterschritten hat ($Z_{B/E} \leq 0$, Ebene gilt als erkannt).

In beiden Teilfunktionen wird demnach der jeweils mit einem positiven Startwert $Z_{B/G\_0}$ bzw. $Z_{B/E\_0}$ beginnende Beobachtungszähler $Z_{B/G}$ bzw. $Z_{B/E}$ schrittweise reduziert, wenn in der ersten Teilfunktion die Fahrbahnneigung $N_{FB}$ negativ ist, das heißt ein Gefälle vorliegt ($N_{FB} < 0 \rightarrow I_{B/G} < 0$), und wenn in der zweiten Teilfunktion die Fahrbahnneigung $N_{FB}$ in etwa gleich Null ist, also eine Ebene vorliegt ($N_{FB} \approx 0 \rightarrow |_{B/E} < 0$). Liegen dagegen Abweichungen von dem jeweiligen Idealverlauf der Fahrbahnneigung $N_{FB}$ vor, so wird das Zählerinkrement jeweils größer oder gleich Null ($N_{FB} \geq 0 \rightarrow I_{B/G} \geq 0$; $N_{FB} \neq 0 \rightarrow I_{B/E} \geq 0$). Der jeweilige Beobachtungszähler $Z_{B/G}$ bzw. $Z_{B/E}$ wird dann entweder wieder schrittweise vergrößert oder er bleibt im Wert konstant.

Hierdurch wird das von der Fahrbahnneigung $N_{FB}$ gebildete Eingangssignal implizit geglättet, also einer Tiefpassfilterung unterzogen. Dadurch wird erreicht, dass in der Praxis vorhandene Änderungen bzw. Schwankungen der Fahrbahnneigung $N_{FB}$ nicht zu einer irrtümlichen Erkennung eines Gefälles oder einer Ebene führen können, sondern die Ermittlung des Gefälles bzw. der Ebene und damit des Gefälleauslaufs mit hoher Genauigkeit erfolgt. Da die beiden Teilfunktionen zeitlich hintereinander ablaufen, können innerhalb des Steuerprogramms für die Beobachtungszähler ($Z_{B/G}$, $Z_{B/E}$) und die Zählerinkremente ($I_{B/G}$, $I_{B/E}$) jeweils identische Variablen verwendet werden.

Die Fahrbahnneigung $N_{FB}$ kann beispielsweise mittels einer Neigungssensoranordnung ermittelt werden. Da dies aber einen hohen sensorischen und rechnerischen Aufwand erfordert, um die Fahrbahnneigung $N_{FB}$ mit einer ausreichend hohen Genauigkeit zu bestimmen, wird die Fahrbahnneigung $N_{FB}$ bevorzugt mit den verfügbaren Werten des aktuellen Schleppmomentes $M_M < 0$ des Antriebsmotors, des aktuellen Bremsmomentes $M_{DBr}$ einer aktivierten Dauerbremse, der aktuellen Fahrgeschwindigkeit $v_F$ und der aktuellen Fahrbeschleunigung $a_F$ aus der an sich bekannten Bewegungsgleichung berechnet.

Die Bewegungsgleichung eines Kraftfahrzeugs lautet in allgemeiner Form

$$m_{Fzg} * a_F = F_{Zug} - F_{DBr} - F_W \, ,$$

wobei mit $m_{Fzg}$ die Fahrzeugmasse des Kraftfahrzeugs, mit $a_F$ die Fahrbeschleunigung des Kraftfahrzeugs, mit $F_{Zug}$ die von dem Antriebsmotor auf die Antriebsräder übertragene und im Schubbetrieb negative Zugkraft, mit $F_{DBr}$ die von einer Dauerbremse (Retarder) auf die Antriebsräder übertragene Bremskraft und mit $F_w$ der Fahrwiderstand bezeichnet sind.

Bei stationärer, also unbeschleunigter Fahrt des Kraftfahrzeugs vereinfacht sich die Bewegungsgleichung zu:

$$0 = F_{Zug} - F_{DBr} - F_W \, .$$

Mit dem in diesem Fall als Schleppmoment negativen Antriebsmoment $M_M$ des Antriebsmotors, der Übersetzung $i_{Ha}$ der Antriebsachse, dem dynamischen Reifenradius $r_{dyn}$ der Antriebsräder, der Übersetzung $i_G$ des Stufenschaltgetriebes in dem eingelegten Gang und dem Wirkungsgrad $\eta_{Atr}$ des Antriebsstrangs gilt für die Zugkraft $F_{Zug}$ die Gleichung:

$$F_{Zug} = M_M * i_{Ha} / r_{dyn} * i_G * \eta_{Atr} \, .$$

Unter der Annahme eines an der Eingangswelle des Stufenschaltgetriebes angeordneten Primärretarders als Dauerbremse kann die Bremskraft $F_{DBr}$ der Dauerbremse mit deren Bremsmoment $M_{DBr}$ als

$$F_{DBr} = M_{DBr} * i_{Ha} / r_{dyn} * i_G * \eta_{Atr}$$

angegeben werden. Der Fahrwiderstand $F_w$ setzt sich additiv aus dem Luftwiderstand $F_{Luft}$, dem Rollwiderstand $F_{Roll}$ und dem bei einer Bergabfahrt negativen, also antreibenden Steigungswiderstand $F_{Steig}$ zusammen zur Gleichung

$$F_W = F_{Luft} + F_{Roll} + F_{Steig} \, .$$

Mit dem Luftwiderstandsbeiwert $c_w$, der Querschnittsfläche $A_{Fzg}$ des Kraftfahrzeugs, der Luftdichte p und der Fahrgeschwindigkeit $v_F$ des Kraftfahrzeugs ergibt sich der Luftwiderstand $F_{Luft}$ zu:

$$F_{Luft} = c_W * A_{Fzg} * \rho / 2 * v_F^2 \, .$$

Der Rollwiderstand $F_{Roll}$ kann mit der Rollwiderstandszahl $f_{Roll}$, der Erdbeschleunigung g und dem Längsneigungswinkel $\alpha_{FB}$ der Fahrbahn mit

$$F_{Roll} = f_{Roll} * m_{Fzg} * g * \cos (\alpha_{FB})$$

angegeben werden. Der Steigungswiderstand $F_{Steig}$ ergibt sich entsprechend zu

$$F_{Steig} = m_{Fzg} * g * \sin(\alpha_{FB}),$$

wobei sich bei der hier betrachteten Bergabfahrt das negative Vorzeichen des Steigungswiderstands $F_{Steig}$ aus dem Vorzeichen des bei einem Gefälle negativen Längsneigungswinkels $\alpha_{FB}$ der Fahrbahn ergibt. Somit ergibt sich die Gleichung

$$0 = (M_M - M_{DBr}) * i_{Ha} / r_{dyn} * i_G * h_{Atr} - c_W * \eta_{Atr} * \rho / 2 * v_F^2$$

$$- m_{Fzg} * g * (f_{Roll} * \cos(\alpha_{FB}) + \sin(\alpha_{FB})),$$

aus der die Fahrbahnneigung $N_{FB}$ mit einer Näherungsbeziehung für den Sinus und den Kosinus des Längsneigungswinkels $\alpha_{FB}$ oder mit einem Iterationsverfahren und jeweils mit der Beziehung

$$N_{FB} [\%] = 100 * \arctan(\alpha_{FB} [°])$$

berechnet werden kann.

Wenn ein erfasster Betriebsparameter mit geringem Risikopotential vorübergehend einen kritischen Grenzwert erreicht oder überschritten hat, wird die zweite Teilfunktion zweckmäßig eingefroren bzw. unterbrochen und damit die Ermittlung des Vorliegens einer Fahrwegebene ausgesetzt. Wenn der betreffende Betriebsparameter danach den kritischen Grenzwert wieder unterschritten hat, kann die zweite Teilfunktion wieder weitergeführt werden.

Das Einfrieren bzw. nicht aktivieren der zweiten Teilfunktion kann auf einfache Weise dadurch erfolgen, dass das Zählerinkrement $I_{B/E}$ softwarebezogen so lange gleich Null gesetzt wird ($I_{B/E} = 0$), bis der betreffende Betriebsparameter den kritischen Grenzwert wieder unterschritten hat. Dadurch behält der Beobachtungszähler $Z_{B/E}$ seinen zuletzt erreichten Wert solange unverändert bei.

In dieser Hinsicht ist es zweckmäßig, dass die zweite Teilfunktion unterbrochen wird, wenn das aktuelle Bremsmoment $M_{DBr}$ einer aktivierten Dauerbremse eine vorbestimmte kritische Obergrenze (z.B. 80%) bezüglich der maximalen Bremskapazität $M_{DBr\_max}$ der Dauerbremse überschritten hat. Hierdurch wird erreicht, dass die drehzahlabhängige Bremskapazität $M_{DBr-max}$ der Dauerbremse durch die an sich vorgesehene Schubrückschaltung nicht reduziert wird, und dass bei einer gegebenenfalls an die erkannte Ebene anschließenden Gefällstrecke eine ausreichend hohe Kapazitätsreserve der Dauerbremse für eine bedarfsweise stärkere Verzögerung des Kraftfahrzeugs zur Verfügung steht.

Ebenso wird die zweite Teilfunktion zweckmäßig dann unterbrochen, wenn mittels eines aktivierten Abstandregelsystems (ACC = adaptive cruise control) ein vorausfahrendes Kraftfahrzeug mit einer Fahrgeschwindigkeit $v_{F/a}$ und einem Abstand $\Delta s$ ermittelt wird, die eine unterhalb einer kritischen Einholzeit $\Delta t_{krit}$ liegende Einholzeit $\Delta t_s$ ergeben ($\Delta t_s = \Delta s / (v_F - v_{F/a}) < \Delta t_{krit}$). Hierdurch wird eine mögliche Schubhochschaltung unterdrückt, um eine dadurch bedingte zu schnelle und möglicherweise gefährliche Annäherung an das vorausfahrende Kraftfahrzeug zu vermeiden.

Wenn die Dauer $\Delta t_{fr}$ des unterbrochenen Zustands der zweiten Teilfunktion jedoch eine vorab festgelegte Grenzdauer $\Delta t_{Gr}$ erreicht oder überschritten hat ($\Delta t_{fr} \geq \Delta t_{Gr}$), so wird die zweite Teilfunktion zweckmäßig komplett abgebrochen und bei erfüllten Startbedingungen, wie ein vorliegendes Gefälle und/oder ein vorliegender Schubbetrieb des Antriebsmotors, erneut die erste Teilfunktion gestartet, da sich in der Zwischenzeit größere Änderungen der Betriebsbedingungen, wie z.B. eine stärker veränderte Fahrbahnneigung $N_{FB}$ oder eine in größerem Umfang geänderte Fahrgeschwindigkeit $v_F$, eingestellt haben können.

Ebenso wird die zweite Teilfunktion vorteilhaft dann abgebrochen und bei erfüllten Startbedingungen erneut die erste Teilfunktion gestartet, wenn ein erfasster Betriebsparameter mit hohem Risikopotential eine wesentliche Änderung erfahren hat.

Dies ist besonders dann der Fall, wenn ein nicht eingelegter Vorwärtsgang oder eine Schaltung des Stufenschaltgetriebes detektiert wird, wenn anhand einer Auslenkung des Bremspedals $x_{BP} > 0$ oder anhand eines erhöhten Bremsdruckes $x_{Br} > 0$ eine Betätigung der Betriebsbremse detektiert wird, oder wenn anhand eines positiven Antriebsmomentes $M_M > 0$ ein Zugbetrieb des Antriebsmotors festgestellt wird. In diesen Fällen liegt eine Betriebssituation mit einem manuellen Steuerungseingriff des Fahrers oder mit einem automatischen Steuerungseingriff der Getriebesteuerung oder einer Geschwindigkeitsregelanlage vor, in der eine Schubrückschaltung eher nachteilig ist und daher aus Sicherheitsgründen unterlassen wird.

Zur Verdeutlichung der Erfindung ist der Beschreibung eine Zeichnung beigefügt. In dieser zeigt in

Fig. 1 ein Diagramm mit den Zeitverläufen der Fahrbahnneigung, eines Beobachtungszählers, und eines Zählerinkrementes einer Erken- nungsfunktion des erfindungsgemäßen Verfahrens zur Ermittlung ei- nes Gefälleauslaufs,

Fig. 2 eine Funktion zur Ermittlung des Zählerinkrementes bei einer ersten Teilfunktion der Erkennungsfunktion nach Fig. 1, und

Fig. 3 eine Funktion zur Ermittlung des Zählerinkrementes bei einer zweiten Teilfunktion der Erkennungsfunktion nach Fig. 1.

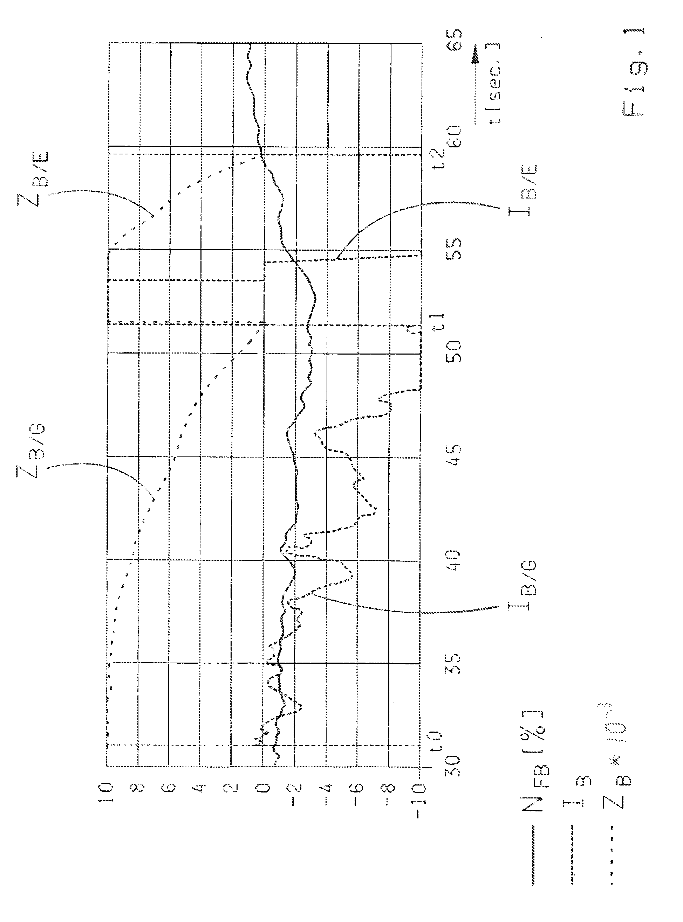

In Fig. 1 sind die bei einem Fahrbetrieb eines Kraftfahrzeugs erfassten Zeitverläufe einer bevorzugt mit dem aktuellen Schleppmoment $M_M < 0$ des Antriebsmotors, dem aktuellen Bremsmoment $M_{DBr}$ einer Dauerbremse, der aktuellen Fahrgeschwindigkeit $v_F$, und der aktuellen Fahrbeschleunigung $a_F$ aus der Bewegungsgleichung berechneten Fahrbahnsteigung $N_{FB}$, eines Beobachtungszählers $Z_B$ und eines Zählerinkrementes $I_B$ dargestellt. Der Beobachtungszähler $Z_B$ und das Zählerinkrement $I_B$ sind jeweils Bestandteil einer ersten Teilfunktion und einer zweiten Teilfunktion einer Erkennungsfunktion zur Ermittlung eines Gefälleauslaufs.

Die erste Teilfunktion dient zur Ermittlung eines Gefälles ($N_{FB} < 0$) und wird zum Zeitpunkt t0 gestartet, in dem z.B. die Startbedingungen eines aktuellen Fahrbahngefälles ($N_{FB} < 0$) und/oder eines aktuellen Schubbetriebs ($M_M < 0$) des Antriebsmotors vorliegen. Der Beobachtungszähler $Z_{B/G}$ beginnt mit dem positiven Anfangswert $Z_{B/G\_0} = 10^3$ und wird in Schritten von vorliegend 0,1 Sekunden additiv mit dem Zählerinkrement $I_{B/G}$ verändert, das als Funktion der Fahrbahnneigung $N_{FB}$ bestimmt wird und Werte zwischen -10 und +10 annehmen kann.

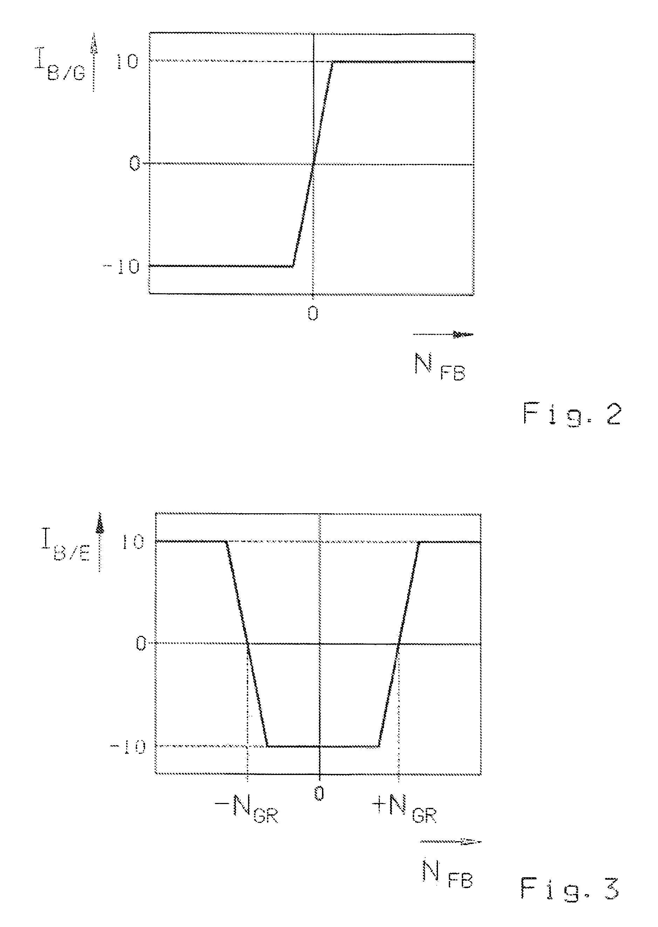

Die hier verwendete Funktion zur Bestimmung des Zählerinkrementes $I_{B/G}$ ist in Fig. 2 abgebildet. Demzufolge nimmt das Zählerinkrement $I_{B/G}$ bei negativer Fahrbahnneigung $N_{FB} < 0$, also bei vorliegendem Fahrbahngefälle, den Wert -10 und bei positiver Fahrbahnneigung $N_{FB} > 0$, d.h. bei vorliegender Fahrbahnsteigung, den Wert +10 an. Im Nahbereich der Fahrbahnsteigung $N_{FB} \approx 0$, also bei vorliegender Ebene, springt der Wert des Zählerinkrementes $I_{B/G}$ mit einer steilen Flanke von -10 auf +10 und nimmt bei einer Fahrbahnsteigung von exakt $N_{FB} = 0$ den Wert Null an.

Aufgrund des nach dem Zeitpunkt t0 in Fig. 1 vorliegenden Fahrbahngefälles ($N_{FB} < 0$) nimmt das Zählerinkrement $I_{B/G}$ zunächst negative Werte an ($I_{B/G} < 0$), so dass der Beobachtungszähler $Z_{B/G}$ stufenweise reduziert wird, bis dieser zum Zeitpunkt t1 den Wert Null erreicht. Bei Erreichen oder Unterschreiten des Wertes Null durch den Beobachtungszähler $Z_{B/G}$ ($Z_{B/G} \leq 0$) wird darauf geschlossen, dass das Fahrzeug eine Gefällestrecke befährt, worauf die erste Teilfunktion beendet ist und im Zeitpunkt t1 oder unmittelbar danach die zweite Teilfunktion gestartet wird.

Die zweite Teilfunktion dient zur Ermittlung des Beginns einer Ebene in der Fahrstrecke ($N_{FB} \approx 0$) und nutzt vorliegend dieselben Variablen $Z_B$ und $I_B$ wie die erste Teilfunktion. Der Beobachtungszähler $Z_{B/E}$ beginnt erneut mit dem positiven Anfangswert $Z_{B/E\_0} = 10^3$ und wird wieder in Schritten von 0,1 Sekunden additiv mit dem Zählerinkrement $I_{B/E}$ verändert, das ebenfalls als Funktion der Fahrbahnneigung $N_{FB}$ bestimmt wird und Werte zwischen -10 und +10 annehmen kann.

Die in der zweiten Teilfunktion verwendete Funktion zur Bestimmung des Zählerinkrementes $I_{B/E}$ unterscheidet sich jedoch wesentlich von derjenigen der ersten Teilfunktion und ist in Fig. 3 abgebildet. Demzufolge nimmt das Zählerinkrement $I_{B/E}$ bei Fahrbahnneigungen, die außerhalb eines Neigungsgrenzwertes von $\pm N_{Gr}$ bzw. außerhalb einer diesbezüglichen Grenzwertspanne ($|N_{FB}| > |\pm N_{Gr}|$) liegen, den Wert +10 an, und bei Fahrbahnneigungen, die innerhalb des Neigungsgrenzwertes von $\pm N_{Gr}$ bzw. innerhalb einer diesbezüglichen Grenzwertspanne ($|N_{FB}| < |\pm N_{Gr}|$) liegen, den Wert -10 an. Im Nahbereich des Neigungsgrenzwertes ($|N_{FB}| \approx |\pm N_{Gr}|$) springt der Wert des Zählerinkrementes $I_{B/E}$ mit einer steilen Flanke von +10 auf -10 bzw. von -10 auf +10 und nimmt bei einer Fahrbahnsteigung von exakt $|N_{FB}| = |\pm N_{Gr}|$ jeweils den Wert Null an.

Aufgrund einer nach dem Zeitpunkt t1 gemäß Fig. 1 zunächst vorliegenden negativen, im Betrag über dem Neigungsgrenzwert $-N_{Gr}$ liegenden Fahrbahngefälles ($|N_{FB}| > |-N_{Gr}|$) nimmt das Zählerinkrement $I_{B/E}$ anfangs den Wert +10 an, so dass der Beobachtungszähler $Z_{B/E}$ vorläufig auf seinem als Obergrenze verwendeten Anfangswert $Z_{B/E\_0} = 10^3$ stehen bleibt. Da sich das Fahrbahngefälle $N_{FB}$ danach aber verringert und eine Zeit lang nahe Null verläuft ($N_{FB} \approx 0$), verändert sich das Zählerinkrement $I_{B/E}$ nach einem Nulldurchgang auf den Wert -10, welches zu einer stufenweisen Reduzierung des Beobachtungszählers $Z_{B/E}$ führt. Dadurch erreicht der Beobachtungszähler $Z_{B/E}$ zum Zeitpunkt t2 den Wert Null, was als das Erkennen einer Ebene bzw. eines Gefälleauslauf gewertet wird. Demzufolge wird die zweite Teilfunktion zum Zeitpunkt t2 beendet und eine Schubhochschaltung ausgelöst.

Dadurch wird die Bremswirkung des Antriebsmotors reduziert, wodurch die im Gefälleauslauf noch vorhandene Hangabtriebskraft zumindest teilweise zum Antrieb des Kraftfahrzeugs in dem Gefälleauslauf und in der beginnenden Ebene genutzt wird. Hierdurch geht das Kraftfahrzeug später als bisher üblich in den Zugbetrieb über, welches besonders bei einem bergigen Streckenprofil zu deutlichen Kraftstoffeinsparungen führt.

Bezugszeichen

| | |
|---|---|
| $a_F$ | Fahrbeschleunigung |
| $A_{Fzg}$ | Querschnittsfläche |
| $c_w$ | Luftwiderstandsbeiwert |
| $F_{DBr}$ | Bremskraft einer Dauerbremse |
| $F_{Luft}$ | Luftwiderstand |
| $f_{Roll}$ | Rollwiderstandszahl |
| $F_{Roll}$ | Rollwiderstand |
| $F_{Steig}$ | Steigungswiderstand |
| $F_w$ | Fahrwiderstand |
| $F_{Zug}$ | Zugkraft des Antriebsmotors |
| $F_w$ | Fahrwiderstand |
| $g$ | Erdbeschleunigung |
| $I_{B/E}$ | Zählerinkrement |
| $I_{B/G}$ | Zählerinkrement |
| $i_G$ | Übersetzung des Stufenschaltgetriebes |
| $i_{Ha}$ | Übersetzung der Antriebsachse |
| $M_{DBr}$ | Bremsmoment einer Dauerbremse |
| $M_{DBr\_max}$ | Maximale Bremskapazität einer Dauerbremse |
| $M_M$ | Antriebsmoment, Schleppmoment des Antriebsmotors |
| $m_{Fzg}$ | Fahrzeugmasse |
| $N_{FB}$ | Fahrbahnneigung in % |
| $N_{Gr}$ | Neigungsgrenzwert |
| $p_{Br}$ | Bremsdruck |
| $r_{dyn}$ | Dynamischer Reifenradius |
| $t$ | Zeit |
| $t0$ | Zeitpunkt |
| $t1$ | Zeitpunkt |
| $t2$ | Zeitpunkt |
| $v_F$ | Fahrgeschwindigkeit des eigenen Kfz |
| $V_{F/a}$ | Fahrgeschwindigkeit eines vorausfahrenden Kfz |
| $X_{BP}$ | Bremspedalauslenkung |
| $Z_B$ | Beobachtungszähler |
| $Z_{B/E}$ | Beobachtungszähler |
| $Z_{B/E\_0}$ | Startwert von $Z_{B/E}$ |
| $Z_{B/G}$ | Beobachtungszähler |
| $Z_{B/G\_0}$ | Startwert von $Z_{B/G}$ |
| $\alpha_{FB}$ | Fahrbahnneigung [°], Längsneigungswinkel |
| $\Delta s$ | Abstand |
| $\Delta t_{fr}$ | Dauer des unterbrochenen Zustands |
| $\Delta t_{Gr}$ | Grenzdauer |
| $\Delta t_{krit}$ | Kritische Einholzeit |
| $\Delta t_s$ | Einholzeit |
| $\eta_{Atr}$ | Wirkungsgrad des Antriebsstrangs |
| $\eta$ | Luftdichte |

**Patentansprüche**

1. Verfahren zur Steuerung eines automatisierten Stufenschaltgetriebes, das innerhalb eines Antriebsstrangs eines Kraftfahrzeugs im Kraftfluss zwischen einem als Verbrennungsmotor ausgebildeten Antriebsmotor und einem Achsantrieb einer Antriebsachse oder einem Verteilergetriebe angeordnet ist, wobei die aktuelle Fahrbahnneigung ($N_{FB}$) ermittelt wird und nach einer Einfahrt in eine Gefällstrecke zur Erhöhung der Bremswirkung des Antriebsmotors und/oder einer Dauerbremse in einen niedrigeren Gang sowie spätestens nach einem Übergang in den Zugbetrieb oder nach der Einfahrt in eine Ebene in einen höheren Gang geschaltet wird, **dadurch gekennzeichnet, dass** spätestens nach der Einfahrt in die Gefällstrecke und/oder nach dem Übergang in den Schubbetrieb eine Erkennungsfunktion zur Ermittlung eines Gefälleauslaufs gestartet wird, und dass bei einem erkannten Gefälleauslauf schon vor der Einfahrt in die Ebene und/oder vor dem Übergang in den Zugbetrieb im Schubbetrieb in einen höheren Gang geschaltet wird, hier als Schubhochschaltung bezeichnet.

2. Verfahren nach Anspruch 1, **dadurch gekennzeichnet, dass** die Erkennungsfunktion eine erste Teilfunktion zur Ermittlung einer Gefällstrecke und ein zweite Teilfunktion zur Ermittlung einer Ebene umfasst, wobei die erste Teilfunktion spätestens nach der Einfahrt in die Gefällstrecke und/oder nach dem Übergang in den Schubbetrieb gestartet wird, die erste Teilfunktion beendet und die zweite Teilfunktion gestartet wird, wenn in der ersten Teilfunktion ein Gefälle erkannt wird, und die zweite Teilfunktion beendet und die Schaltung in einen höheren Gang ausgelöst wird, wenn in der zweiten Teilfunktion eine Ebene erkannt wird.

3. Verfahren nach Anspruch 2, **dadurch gekennzeichnet, dass** innerhalb der ersten Teilfunktion, Beobachtung auf Vorliegen von Gefälle, mit Ausnahme des Start- und Initialisierungsschrittes, Schritte a und b), bis zur Ermittlung eines Gefälles die folgenden Schritte in einem festgelegten Zeittakt wiederholt durchlaufen werden:

a) Start der ersten Teilfunktion, Beobachtung auf Gefälle,
b) Setzen eines Beobachtungszählers $Z_{B/G}$ auf einen positiven Startwert $Z_{B/G\_0}$ ($Z_{B/G} = Z_{B/G} > 0$, Initialisierung),
c) Ermitteln der aktuellen Fahrbahnneigung $N_{FB}$,
d) Ermitteln eines aktuellen Zählerinkrementes $I_{B/G}$ in Abhängigkeit von der aktuellen Fahrbahnneigung $N_{FB}$ ($I_{B/G} = f(N_{FB})$), wobei eine Fahrbahnsteigung ($N_{FB} > 0$) ein positives Zählerinkrement ($I_{B/G} > 0$), eine Ebene ($N_{FB} \approx 0$) ein Nullinkrement ($I_{B/G} \approx 0$), und ein Fahrbahngefälle ($N_{FB} < 0$) ein negatives Zählerinkrement ($I_{B/G} < 0$) ergibt,
e) Addition des Zählerinkrementes $I_{B/G}$ zu dem Beobachtungszähler $Z_{B/G}$ ($Z_{B/G} = Z_{B/G} + I_{B/G}$),
f) Beenden der ersten Teilfunktion, wenn der Beobachtungszähler $Z_{B/G}$ den Wert Null erreicht oder unterschritten hat ($Z_{B/G} \leq 0$, Gefälle gilt als erkannt).

4. Verfahren nach Anspruch 2 oder 3, **dadurch gekennzeichnet, dass** innerhalb der zweiten Teilfunktion, Beobachtung auf Vorliegen von einer Ebene, mit Ausnahme des Start- und Initialisierungsschrittes Schritte g und h), bis zur Ermittlung einer Ebene die folgenden Schritte in einem festgelegten Zeittakt wiederholt durchlaufen werden:

g) Start der zweiten Teilfunktion, Beobachtung auf Ebene,
h) Setzen eines Beobachtungszählers $Z_{B/E}$ auf einen positiven Startwert $Z_{B/E\_0}$ ($Z_{B/E} = Z_{B/E\_0} > 0$, Initialisierung),
i) Ermitteln der aktuellen Fahrbahnneigung $N_{FB}$,
j) Ermitteln eines aktuellen Zählerinkrementes $I_{B/E}$ in Abhängigkeit von der aktuellen Fahrbahnneigung $N_{FB}$ ($I_{B/E} = f(N_{FB})$), wobei eine im Betrag außerhalb eines nahe Null liegenden Neigungsgrenzwertes $\pm N_{Gr}$ oder einer diesbezüglichen Grenzwertspanne liegende Fahrbahnneigung $N_{FB}$ ($|N_{FB}| > |\pm N_{Gr}|$) ein positives Zählerinkrement ($I_{B/E} > 0$), eine im Betrag den Neigungsgrenzwert $\pm N_{Gr}$ treffende Fahrbahnneigung $N_{FB}$ ($|N_{FB}| \approx |\pm N_{Gr}|$ ein Nullinkrement ($I_{B/E} \approx 0$), und eine im Betrag innerhalb des Neigungsgrenzwertes $N_{Gr}$ oder einer diesbezüglichen Grenzwertspanne ($|N_{FB}| < |\pm N_{Gr}|$) liegende Fahrbahnneigung $N_{FB}$ ein negatives Zählerinkrement ($I_{B/E} < 0$) ergibt,
k) Addition des Zählerinkrementes $I_{B/E}$ zu dem Beobachtungszähler $Z_{B/E}$ ($Z_{B/E} = Z_{B/E} + I_{B/E}$),
l) Beenden der zweiten Teilfunktion, wenn der Beobachtungszähler $Z_{B/E}$ den Wert Null erreicht oder unterschritten hat ($Z_{B/E} \leq 0$, Ebene gilt als erkannt).

5. Verfahren nach zumindest einem der Ansprüche 1 bis 4, **dadurch gekennzeichnet, dass** die Fahrbahnneigung $N_{FB}$ mit dem aktuellen Schleppmoment ($M_M < 0$) des Antriebsmotors, dem aktuellen Bremsmoment ($M_{DBr}$) einer Dauerbremse, der aktuellen Fahrgeschwindigkeit ($v_F$) und der aktuellen Fahrbeschleunigung ($a_F$) aus der Bewegungsgleichung für ein Fahrzeug berechnet wird.

6. Verfahren nach zumindest einem der Ansprüche 2 bis 5, **dadurch gekennzeichnet, dass** die zweite Teilfunktion unterbrochen wird, wenn ein erfasster Betriebsparameter mit geringem Risikopotential vorübergehend einen kritischen Grenzwert erreicht oder überschritten hat, und dass die zweite Teilfunktion weitergeführt wird, wenn der Betriebsparameter den kritischen Grenzwert wieder unterschritten hat.

7. Verfahren nach Anspruch 6, **dadurch gekennzeichnet, dass** die zweite Teilfunktion **dadurch** unterbrochen wird, dass das Zählerinkrement $I_{B/E}$ so lange gleich Null gesetzt wird ($I_{B/E} = 0$), bis der Betriebsparameter den kritischen Grenzwert wieder unterschritten hat.

8. Verfahren nach Anspruch 6 oder 7, **dadurch gekennzeichnet , dass** die zweite Teilfunktion unterbrochen wird, wenn das aktuelle Bremsmoment ($M_{DBr}$) einer aktivierten Dauerbremse eine kritische Obergrenze , z.B. 80%, bezüglich der maximalen Bremskapazität ($M_{DBr\_max}$) der Dauerbremse überschritten hat.

9. Verfahren nach zumindest einem der Ansprüche 6 bis 8, **dadurch gekennzeichnet, dass** die zweite Teilfunktion unterbrochen wird, wenn mittels eines Abstandregelsystems ein vorausfahrendes Kraftfahrzeug mit einer Fahrgeschwindigkeit ($v_{F/a}$) und einem Abstand ($\Delta s$) ermittelt wird, die eine unterhalb einer kritischen Einholzeit ($\Delta t_{krit}$) liegende Einholzeit ($\Delta t_s$) ergeben ($\Delta t_s < \Delta t_{krit}$).

10. Verfahren nach zumindest einem der Ansprüche 6 bis 9, **dadurch gekennzeichnet, dass** die zweite Teilfunktion abgebrochen wird, wenn die Dauer ($\Delta t_{fr}$) des unterbrochenen Zustandes eine vorab festgelegte Grenzdauer ($\Delta t_{Gr}$) erreicht oder überschritten hat ($\Delta t_{fr} \geq \Delta t_{Gr}$), und dass bei erfüllten Startbedingungen erneut die erste Teilfunktion gestartet wird.

11. Verfahren nach zumindest einem der Ansprüche 2 bis 10, **dadurch gekennzeichnet, dass** die zweite Teilfunktion abgebrochen wird, wenn ein erfasster Betriebsparameter mit hohem Risikopotential eine wesentliche Änderung erfahren hat, und dass bei erfüllten Startbedingungen erneut die erste Teilfunktion gestartet wird.

12. Verfahren nach Anspruch 11, **dadurch gekennzeichnet, dass** die zweite Teilfunktion abgebrochen wird, wenn ein nicht eingelegter Vorwärtsgang oder eine Schaltung des Stufenschaltgetriebes detektiert wird.

13. Verfahren nach Anspruch 11 oder 12, **dadurch gekennzeichnet, dass** die zweite Teilfunktion abgebrochen wird, wenn eine Betätigung der Betriebsbremse detektiert wird ($x_{BP} > 0$, $p_{Br} > 0$).

14. Verfahren nach zumindest einem der Ansprüche 11 bis 13, **dadurch gekennzeichnet, dass** die zweite Teilfunktion abgebrochen wird, wenn ein Zugbetrieb des Antriebsmotors detektiert wird ($M_M > 0$).

## Claims

1. Method for controlling an automatic multi-stage shift transmission which is arranged within a drivetrain of a motor vehicle in the power flow between a drive engine, designed as an internal combustion engine, and an axle drive of a drive axle or a transfer box, with the present roadway inclination ($N_{FB}$) being determined, and with a shift into a lower gear being carried out in order to increase the braking action of the drive engine and/or of a retarder after travelling onto a downhill slope, and with a shift into a higher gear being carried out at the latest after a transition into the traction mode or after travelling onto a level plane, **characterized in that** a detection function for determining a downhill slope run-out is started at the latest after travelling onto the downhill slope and/or after the transition into the overrun mode, and **in that**, in the event of a downhill slope run-out being detected, a shift is carried out into a higher gear in the overrun mode, this being referred to as an overrun upshift, already before travelling onto the level plane and/or before the transition into the traction mode.

2. Method according to Claim 1, **characterized in that** the detection function comprises a first sub-function for determining a downhill slope and a second sub-function for determining a level plane, with the first sub-function being started at the latest after travelling onto the downhill slope and/or after the transition into the overrun mode, the first sub-function being ended and the second sub-function being started when a downhill slope is detected in the first sub-function, and the second sub-function being ended and the shift into a higher gear being triggered when a level plane is detected in the second sub-function.

3. Method according to Claim 2, **characterized in that**, within the first sub-function, monitoring for the presence of a downhill slope, with the exception of the starting and initialization step, steps a and b, the following steps are carried out repeatedly in a defined time cycle until a downhill slope is determined:

   a) start of the first sub-function, monitoring for a downhill slope,
   b) setting a monitoring counter $Z_{B/G}$ to a positive start value $Z_{B/G\_0}$ ($Z_{B/G} = 2_{B/G\_0} > 0$, initialization),
   c) determining the present roadway inclination $N_{FB}$,

d) determining a present counter increment $I_{B/G}$ as a function of the present roadway inclination $N_{FB}$ ($I_{B/G} = f(N_{FB})$), wherein a roadway uphill slope ($N_{FB} > 0$) yields a positive counter increment ($I_{B/G} > 0$), a level plane ($N_{FB} \approx 0$) yields a zero increment ($I_{B/G} \approx 0$) and a roadway downhill slope ($N_{FB} < 0$) yields a negative counter increment ($I_{B/G} < 0$),

e) adding the counter increment $I_{B/G}$ to the monitoring counter $Z_{B/G}$ ($Z_{B/G} = Z_{B/G} + I_{B/G}$),

f) ending the first sub-function when the monitoring counter $Z_{B/G}$ reaches or has fallen below the value zero ($Z_{B/G} \leq 0$, downhill slope detected).

4. Method according to Claim 2 or 3, **characterized in that**, within the second sub-function, monitoring for the presence of a level plane, with the exception of the starting and initialization step, steps g and h, the following steps are carried out repeatedly in a defined time cycle until a level plane is determined:

g) start of the second sub-function, monitoring for a level plane,

h) setting a monitoring counter $Z_{B/E}$ to a positive start value $Z_{B/E\_0}$ ($Z_{B/E} = 2_{B/E\_0} > 0$, initialization),

i) determining the present roadway inclination $N_{FB}$,

j) determining a present counter increment $I_{B/E}$ as a function of the present roadway inclination $N_{FB}$ ($I_{B/E} = f(N_{FB})$), wherein a roadway inclination $N_{FB}$ ($|N_{FB}|>|\pm N_{Gr}|$) which in terms of magnitude lies outside a near-zero inclination limit value $\pm N_{Gr}$ or a limit value range in this regard yields a positive counter increment ($I_{B/E} > 0$), a roadway inclination $N_{FB}$ ($|N_{FB}|\approx| \pm N_{Gr}|$) which in terms of magnitude equates to the inclination limit value $\pm N_{Gr}$ yields a zero increment ($IB/E \approx 0$), and a roadway inclination $N_{FB}$ which in terms of magnitude lies within an inclination limit value $N_{Gr}$ or a limit value range in this regard ($|N_{FB}|<|\pm N_{Gr}|$) yields a negative counter increment ($I_{B/E} < 0$),

k) adding the counter increment $I_{B/E}$ to the monitoring counter $Z_{B/E}$ ($Z_{B/E} = Z_{B/E} + I_{B/E}$),

1) ending the second sub-function when the monitoring counter $Z_{B/E}$ reaches or has fallen below the value zero ($Z_{B/E} \leq 0$, level plane detected).

5. Method according to at least one of Claims 1 to 4, **characterized in that** the roadway inclination $N_{FB}$ is calculated from the equation of motion for a vehicle using the present drag torque ($M_M < 0$) of the drive engine, the present braking torque ($M_{DBr}$) of a retarder, the present driving speed ($V_F$) and the present driving acceleration ($a_F$).

6. Method according to at least one of Claims 2 to 5, **characterized in that** the second sub-function is interrupted if a measured operating parameter with a low risk potential has temporarily reached or exceeded a critical limit value, and **in that** the second sub-function is continued when the operating parameter has fallen below the critical limit value again.

7. Method according to Claim 6, **characterized in that** the second sub-function is interrupted by the counter increment $I_{B/E}$ being set to zero ($I_{B/E} = 0$) until the operating parameter has fallen below the critical limit value again.

8. Method according to Claim 6 or 7, **characterized in that** the second sub-function is interrupted if the present braking torque ($M_{DBr}$) of an activated retarder has exceeded a critical upper limit, for example 80%, in relation to the maximum braking capacity ($M_{DBr-max}$) of the retarder.

9. Method according to at least one of Claims 6 to 8, **characterized in that** the second sub-function is interrupted if a distance regulating system determines a vehicle travelling in front with a driving speed ($v_{F/a}$) and a distance ($\Delta s$) which yield a closing-in time ($\Delta t_s$) below a critical closing-in time ($\Delta t_{krit}$) ($\Delta t_s < \Delta t_{krit}$).

10. Method according to at least one of Claims 6 to 9, **characterized in that** the second sub-function is terminated if the duration ($\Delta t_{fr}$) of the interrupted state has reached or exceeded a predefined limit duration ($\Delta t_{Gr}$) ($\Delta t_{fr} \geq \Delta t_{Gr}$), and **in that** the first sub-function is started again if start conditions are met.

11. Method according to at least one of Claims 2 to 10, **characterized in that** the second sub-function is terminated if a measured operating parameter with high risk potential has undergone a significant change, and **in that** the first sub-function is started again if start conditions are met.

12. Method according to Claim 11, **characterized in that** the second sub-function is terminated if it is detected that a forward gear is not engaged or a shift of the multi-stage shift transmission is detected.

13. Method according to Claim 11 or 12, **characterized in that** the second sub-function is terminated if an actuation of the service brake is detected ($x_{BP} > 0$, $p_{Br} > 0$).

**14.** Method according to at least one of Claims 11 to 13, **characterized in that** the second sub-function is terminated if a traction mode of the drive engine is detected ($M_M > 0$).

## Revendications

**1.** Procédé pour commander une boîte de vitesses étagée automatique qui est disposée dans la chaîne cinématique d'un véhicule automobile dans le flux des forces entre un moteur d'entraînement réalisé sous la forme d'un moteur à combustion interne et un mécanisme d'entraînement d'essieu d'un essieu moteur ou une boîte de transfert, l'inclinaison actuelle de la chaussée ($N_{FB}$) étant déterminée et un rapport inférieur étant engagé après être entré dans un tronçon en pente descendante afin d'accroître l'effet de freinage du moteur d'entraînement et/ou d'un frein continu et un rapport supérieur étant engagé au plus tard après être passé en mode traction ou après être entré dans un tronçon horizontal, **caractérisé en ce qu'**une fonction de détection destinée à déterminer une sortie de pente descendante est démarrée au plus tard après être entré dans le tronçon en pente descendante et/ou après être passé en mode propulsion et **en ce que** lors de la détection d'une sortie de pente descendante, un rapport supérieur est engagé en mode propulsion bien avant l'entrée dans le tronçon horizontal et/ou avant le passage en mode traction, une opération qui est appelée ici passage du rapport supérieur en propulsion.

**2.** Procédé selon la revendication 1, **caractérisé en ce que** la fonction de détection comprend une première fonction partielle pour déterminer un tronçon en pente descendante et une deuxième fonction partielle pour déterminer un tronçon horizontal, la première fonction partielle étant démarrée au plus tard après être entré dans le tronçon en pente descendante et/ou après être passé en mode propulsion, la première fonction partielle étant terminée et la deuxième fonction partielle étant démarrée lorsqu'une pente descendante est détectée dans la première fonction partielle et la deuxième fonction partielle étant terminée et le passage à un rapport supérieur étant déclenché lorsqu'un tronçon horizontal est détecté dans la deuxième fonction partielle.

**3.** Procédé selon la revendication 2, **caractérisé en ce que** les étapes suivantes sont exécutées de manière répétée dans un cycle temporel fixe dans la première fonction partielle, l'observation de la présence d'une pente descendante, à l'exception des étapes de démarrage et d'initialisation, les étapes a et b, jusqu'à la détermination d'une pente descendante :

a) démarrage de la première fonction partielle, observation de la présence d'une pente descendante,
b) attribution d'une valeur de démarrage positive $Z_{B/G\_0}$ ($Z_{B/G} = Z_{B/G\_0} > 0$, initialisation) à un compteur d'observations $Z_{B/G}$,
c) détermination de l'inclinaison actuelle de la chaussée $N_{FB}$,
d) détermination d'un incrément actuel du compteur $I_{B/G}$ en fonction de l'inclinaison actuelle de la chaussée $N_{FB}$ ($I_{B/G} = f (N_{FB})$), une pente montante de la chaussée ($N_{FB} > 0$) donnant un incrément positif du compteur ($I_{B/G} > 0$), un tronçon horizontal ($N_{FB} \approx 0$) un incrément nul ($I_{B/G} \approx 0$), et une pente descendante de la chaussée ($N_{FB} < 0$) un incrément négatif du compteur ($I_{B/G} < 0$),
e) addition de l'incrément du compteur $I_{B/G}$ au compteur d'observations $Z_{B/G}$ ($Z_{B/G} = Z_{B/G} + I_{B/G}$),
f) terminaison de la première fonction partielle lorsque le compteur d'observations $Z_{B/G}$ est devenu égal ou inférieur à la valeur zéro ($Z_{B/G} \leq 0$, la pente descendante est considérée comme détectée).

**4.** Procédé selon la revendication 2 ou 3, **caractérisé en ce que** les étapes suivantes sont exécutées de manière répétée dans un cycle temporel fixe dans la deuxième fonction partielle, l'observation de la présence d'un tronçon horizontal, à l'exception des étapes de démarrage et d'initialisation, les étapes g et h, jusqu'à la détermination d'un tronçon horizontal :

g) démarrage de la deuxième fonction partielle, observation de la présence d'un tronçon horizontal,
h) attribution d'une valeur de démarrage positive $Z_{B/E\_0}$ ($Z_{B/E} = 2_{B/E\_0} > 0$, initialisation) à un compteur d'observations $Z_{B/E}$,
i) détermination de l'inclinaison actuelle de la chaussée $N_{FB}$,
j) détermination d'un incrément actuel du compteur $I_{B/E}$ en fonction de l'inclinaison actuelle de la chaussée $N_{FB}$ ($I_{B/E} = f (N_{FB})$), une inclinaison de la chaussée $N_{FB}$ dont la valeur absolue est en dehors d'une valeur limite d'inclinaison $\pm N_{Gr}$ proche de zéro ou d'une plage de valeurs limites concernant celle-ci ($|N_{FB}| > |\pm N_{Gr}|$) donnant un incrément positif du compteur ($I_{B/E} > 0$), une inclinaison de la chaussée $N_{FB}$ dont la valeur absolue correspond à la valeur limite d'inclinaison $\pm N_{Gr}$ ($|N_{FB}| \approx |\pm N_{Gr}|$) donnant un incrément nul ($I_{B/E} \approx 0$), et une inclinaison de la chaussée $N_{FB}$ dont la valeur absolue est incluse dans la valeur limite d'inclinaison $N_{Gr}$ ou une plage de valeurs limites concernant celle-ci ($|N_{FB}| < |\pm N_{Gr}|$) donnant un incrément négatif du compteur ($I_{B/E} < 0$),

k) addition de l'incrément du compteur $I_{B/E}$ au compteur d'observations $Z_{B/E}$ ($Z_{B/E} = Z_{B/E} + I_{B/E}$),

1) terminaison de la deuxième fonction partielle lorsque le compteur d'observations $Z_{B/E}$ est devenu égal ou inférieur à la valeur zéro ($Z_{B/E} \leq 0$, le tronçon horizontal est considéré comme détecté).

5. Procédé selon au moins l'une des revendications 1 à 4, **caractérisé en ce que** l'inclinaison de la chaussée $N_{FB}$ est calculée avec le moment de traction ($M_M < 0$) actuel du moteur d'entraînement, le couple de freinage ($M_{DBr}$) actuel d'un frein continu, la vitesse de déplacement ($v_F$) actuelle et l'accélération de déplacement ($a_F$) actuelle à partir de la comparaison du mouvement pour un véhicule.

6. Procédé selon au moins l'une des revendications 2 à 5, **caractérisé en ce que** la deuxième fonction partielle est interrompue lorsqu'un paramètre de fonctionnement détecté a atteint ou dépassé momentanément une valeur limite critique avec un faible potentiel de risque et **en ce que** la deuxième fonction partielle est poursuivie lorsque le paramètre de fonctionnement est redevenu inférieur à la valeur limite critique.

7. Procédé selon la revendication 6, **caractérisé en ce que** la deuxième fonction partielle est interrompue du fait que l'incrément du compteur $I_{B/E}$ est mis à zéro ($I_{B/E} = 0$) jusqu'à ce que le paramètre de fonctionnement soit redevenu inférieur à la valeur limite critique.

8. Procédé selon la revendication 6 ou 7, **caractérisé en ce que** la deuxième fonction partielle est interrompue lorsque le couple de freinage ($M_{DBr}$) actuel d'un frein continu activé a dépassé une limite supérieure critique, par exemple 80 % de la capacité de freinage maximale du frein continu ($M_{DBr-max}$).

9. Procédé selon au moins l'une des revendications 6 à 8, **caractérisé en ce que** la deuxième fonction partielle est interrompue lorsqu'un système de régulation de la distance détermine une vitesse de déplacement ($v_{F/a}$) et une distance ($\Delta s$) d'un véhicule automobile qui précède qui produisent ($\Delta t_s < \Delta t_{scrit}$) un temps de rattrapage ($\Delta t_s$) inférieur à un temps de rattrapage critique ($\Delta t_{crit}$).

10. Procédé selon au moins l'une des revendications 6 à 9, **caractérisé en ce que** la deuxième fonction partielle est arrêtée lorsque la durée ($\Delta t_{fr}$) de l'état interrompu a atteint ou dépassé une durée limite ($\Delta t_{Gr}$) fixée à l'avance ($\Delta t_{fr} \geq \Delta t_{Gr}$) et **en ce que** la première fonction partielle est de nouveau démarrée lorsque les conditions de démarrage sont réunies.

11. Procédé selon au moins l'une des revendications 2 à 10, **caractérisé en ce que** la deuxième fonction partielle est arrêtée lorsqu'un paramètre de fonctionnement détecté a subi une modification importante avec un potentiel de risque élevé et **en ce que** la première fonction partielle est de nouveau démarrée lorsque les conditions de démarrage sont réunies.

12. Procédé selon la revendication 11, **caractérisé en ce que** la deuxième fonction partielle est arrêtée lorsqu'un rapport de marche avant non engagé ou un changement de rapport de la boîte de vitesses étagée est détecté.

13. Procédé selon la revendication 11 ou 12, **caractérisé en ce que** la deuxième fonction partielle est arrêtée lorsqu'un actionnement du frein de service est détecté ($x_{BP} > 0$, $p_{Br} > 0$).

14. Procédé selon au moins l'une des revendications 11 à 13, **caractérisé en ce que** la deuxième fonction partielle est arrêtée lorsqu'un fonctionnement en traction du moteur d'entraînement est détecté ($M_M > 0$).

Fig. 1

$N_{FB}$ [%]

$Z_B * 10^{-3}$

$Z_{B/E}$

$Z_{B/G}$

$I_{B/E}$

$I_{B/G}$

t [sec.]

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3334718 A1
- US 5231897 A
- EP 0864781 A1
- DE 4440706 C2